# EUROPEAN PATENT APPLICATION

(11) **EP 1 052 584 A2**
(43) Date of publication of application: **15.11.2000**
(21) Application number: 00303278.6
(22) Date of filing: 18.04.2000
(51) Int. Cl.: G06F 17/60, G06F 17/21

(54) **Time-based formatting of data**

(30) Priority: 29.04.1999 US 301873
(71) Applicant: LUCENT TECHNOLOGIES INC., Murray Hill, New Jersey 07974-0636 (US)
(72) Inventor: Rajkumar, Ajay, New Providence, New Jersey 07974 (US)
(74) Representative: Watts, Christopher Malcolm Kelway, Dr.

(57) **Abstract**

A method for associating a display format with data depending on the time associated with the data is disclosed. In one embodiment of the invention, the data is received or created. The display format associated with the data is based on the time associated with the data. The time associated with the data can be the time at which the data was received or created. In another embodiment of the invention, a prior file with time-stamped data is received by an update. The update can be either a partial update containing data or an updated file containing data. When the partial update is obtained, the data in the partial update is time stamped. Depending on the time stamp of the data, different display formats are associated with both the data in the partial update and with the data in the prior file. When the updated file is obtained, the updated file is compared with the prior file's time-stamped data. The new data, which is data that is in the updated file and not in the prior file, is time stamped with the time at which the updated file is received. The data that is common to both the updated file and the prior file retains the time stamp already associated with the data in the prior file. A current file is generated. The current file includes data in the updated file that is not in the prior file and data that is common to the updated file and the prior file. A display format is associated with the data in the current file depending on the time stamp of the data. Preferably, associating a display format with the data involves defining a plurality of time intervals and selecting a display format for each time interval. All of the data with a time stamp in a particular time interval would have the same display format associated with it. Each time interval can be associated with a different display format. The display formats can differ in any aspect, such as color, font, voice characteristics, or any combination of aspects of the display format. This allows a reader to tell when a file is created or received, and when updates are made to the prior file, thus saving time and reducing frustration. It permits the reader to decide which sections of the data to read and eliminates the need to re-read already read portions of the prior file. This is particularly useful for a data file such as a news story posted on a web site that has been updated repeatedly because it allows the reader to tell when the parts of the story have been added. This is also particularly useful for a data file such as a contract that has gone through several revisions because it allows the reader to see the chronology of the revisions.

## Description

### Technical Field

The present invention relates generally to the field of data formatting and more particularly to formatting data based on the age of the data.

### Background of the Invention

Some data files, such as news stories posted on web sites, get updated very frequently. Often the update only changes some of the content of the data file, and the remainder of the content of the data file remains the same.

A problem with this is that a reader cannot distinguish the parts of the data file that have been updated from the parts that have not changed. Therefore, a reader will have to read through the whole data file again to see what content, if any, has changed since the reader last read through the data file.

Some software allows a user to compare an updated file with a prior version of the data file, referred to herein as a prior file. The software marks the additions and deletions to the prior file. This way of marking prior files still suffers from disadvantages because more than one update may have occurred since the reader last read the prior file. The comparing of the two files can be performed either by the person updating the prior file or by the reader. If the person updating the prior file is comparing the two files, such as for a news story posted on a web site, only the most recent update will be marked in the file generated by the compare. Therefore, the reader will not know if any data besides the most recent update has been added since the reader last read the prior file. Thus, the reader must read through the whole generated file again or risk missing some data. If the reader is comparing the two files, three requirements must be met. The reader must have access to an electronic copy of the prior file. The reader also must devote resources, such as disk space, to save the prior file. Finally, and most unlikely, the reader must have the foresight to save the prior file, realizing the need for it in the future.

Another disadvantage of marking data using conventional compare methods is that the reader cannot tell when updates were made to the prior file. For example, in cases where a contract has gone through several revisions, the reader cannot see the chronology of the revisions. Similarly, in cases where a news story posted on a web site has been updated repeatedly, the reader cannot tell which parts of the story have been added shortly after the reader last saw the story and which parts of the story have been added very recently.

### Summary of the Invention

The present invention solves the above-described problems by associating a display format with data, based on the time associated with the data. In one embodiment of the invention, the data is received or created. The display format associated with the data is based on the time associated with the data. The time associated with the data can be the time at which the data was received or created.

In another embodiment of the invention, a prior file with time-stamped data is received by an update. The update can be either a partial update containing data or an updated file containing data. When the partial update is obtained, the data in the partial update is time stamped. Depending on the time stamp of the data, different display formats are associated with both the data in the partial update and with the data in the prior file. When the updated file is obtained, the updated file is compared with the prior file's time-stamped data. The new data, which is data that is in the updated file and not in the prior file, is time stamped with the time at which the updated file is received. The data that is common to both the updated file and the prior file retains the time stamp already associated with the data in the prior file. A current file is generated. The current file includes data in the updated file that is not in the prior file and data that is common to the updated file and the prior file. A display format is associated with the data in the current file depending on the time stamp of the data.

Preferably, associating a display format with the data involves defining a plurality of time intervals and selecting a display format for each time interval. All of the data with a time stamp in a particular time interval would have the same display format associated with it. Each time interval can be associated with a different display format. The display formats can differ in any aspect, such as color, font, voice characteristics such as tone, pitch or volume, or any combination of aspects of the display format.

Associating a display format with data depending on the time associated with the data allows a reader to tell when a file is received or created, and when updates are made to the prior file, thus saving time and reducing frustration. It permits the reader to decide which sections of the data to read and eliminates the need to re-read already read portions of the prior file. This is particularly useful for a data file such as a news story posted on a web site that has been updated repeatedly because it allows the reader to tell when the parts of the story have been added. This is also particularly useful for a data file such as a contract that has gone through several revisions because it allows for the reader to see the chronology of the revisions.

### Brief Description of the Drawings

Figure 1 is a block diagram of a system that associates a display format with data depending on a time stamp of the data; and
Figure 2 is a block diagram of a system that associates a display format with data depending on a time stamp of the data, where the data is updated at a remote location.

### Detailed Description

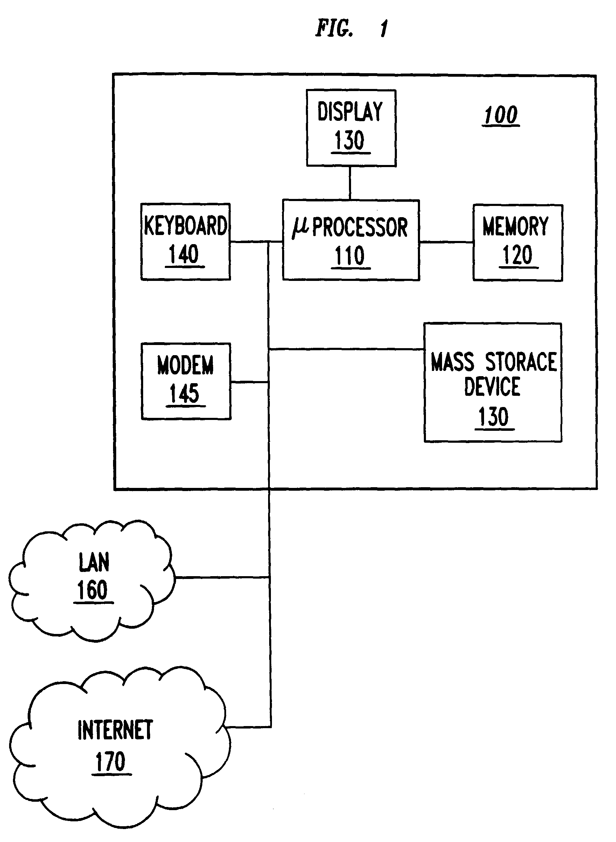

Figure 1 is a block diagram of system 100, such as a computer system. Although the embodiment of the invention is being illustrated with the use of a computer system, the invention is not limited to use in computer systems. The invention may equally be applicable to any device that is capable of receiving data and associating a display format with the data depending on the time associated with the data.

At least some of the data may represent alphanumeric, pictorial, graphic or other visually or audibly displayable information. The data may be grouped into a file, which can be a set of data or a collection of sets of data. A set of data may be a collection of data with a common characteristic, such as a common time or time period of reception or creation.

System 100 has one or more input devices, a processor, such as microprocessor 110, memory 120, and display 130. The input device can be any input device, including key board 140, modem 145, mass storage device 150, or a communications network, such local area network (LAN) 160, a wide area network (WAN), or Internet 170. Similarly, the display can be any type of display such as a video display including a screen or an audio display including a speaker. System 100 may also include other elements, not shown, such as busses, co-processors, or application specific integrated circuits (ASICs).

In one embodiment of the invention, data is obtained by either creating the data in system 100 or receiving the data through one of system 100's input devices such as keyboard 140 or LAN 160. A time is associated with the data. This time can be any time that has some significance with reference to the data, such as the time at which the data is received by system 100, or the time at which the data is created. The data can be forwarded to processor 110 where it is time stamped with the time the data is received. The time stamp is then used as the time associated with the data. Alternatively, the data can be received with a time stamp. In either case, the data and its time stamp are then stored in memory 120. When the information represented by the data is to be displayed, the data and its associated time are forwarded to processor 110, which associates a display format with the data according to an assignment scheme.

The assignment scheme for associating a display format with the data can be stored in memory 120 or any memory in system 100 from which processor 110 can retrieve the assignment scheme. The assignment scheme is initially set to a default assignment scheme. The assignment scheme can then be defined and repeatedly redefined by a user to be any acceptable scheme of associating display formats with data depending on the age of the data, including any of the schemes described below.

In the preferred embodiment, the assignment scheme involves defining a plurality of time intervals and selecting a display format for each time interval. The intervals can be of varying duration, all the same duration, or a combination of the two. For example, the assignment scheme can have four time intervals all of varying duration: a first time interval starting at the current time and ending one hour from the current time; a second time interval starting at the end of the first time interval and ending one day from the current time; a third time interval starting at the end of the second time interval and ending one week from the current time; and a fourth time interval starting at the end of the third time interval and including all of the remaining time. Alternatively, the assignment scheme can have three time intervals, some of which have the same duration: a first time interval starting at the current time and ending one hour from the current time; a second time interval starting at the end of the first time interval and ending two hours from the current time; and a third time interval starting at the end of the second time interval and including all of the remaining time.

All of the time stamped data in a particular time interval is associated with the same display format. Preferably, the data in each time interval is associated with a display format that is somehow different from the display format for every other time interval, although the data in several time intervals can be associated with the exact same display format. Alternatively, instead of defining time intervals, each time stamped on the data can be associated with a different display format, where the display format associated with one time is different from each other display format associated with every other time. The display format includes a character display format and the addition of characters, such as an underline, an overstrike, or a border. When the data represents characters, the character display format is the appearance of the character itself, for example, color or font, and in the case of data that is representative of sound, character display characteristics are the sound of the character, such as tone or volume. Any aspect of the display format or any combination of different aspects of the display format can be varied to make one display format different from another display format.

In another embodiment of the invention, a prior file is stored in memory 120. The data in the prior file is time stamped with the time the data was added to the prior file. The prior file is updated by obtaining an update. The update can be a partial update or an updated file. The updating can be done locally, through the receipt of the update on one of the input devices of system 100 or the creation of the update on system 100, or the updating can be done remotely and the file generated by the updating, referred to herein as the current file, is then received by system 100.

When the prior file, such as a contract, is updated locally by receiving a partial update to the contract through one of system 100's input devices such as keyboard 140 or LAN 160, the data in the partial update is forwarded to processor 110 where it is time stamped. The data in the partial update and its time stamp is then stored in memory 120. If the partial update replaces some data from the prior file, the replaced data and its time stamp can be erased from memory 120, or they can be marked to show that the update indicated that they should be deleted. The data in memory 120 at the end of this process is the current file. When the information represented by the data in the current file is to be displayed, the data in the current file and its time stamp are forwarded to processor 110, which associates a display format with the data according to the assignment scheme as described above. Processor 110 then sends the data and its associated display format to display 130.

In addition to the assignments schemes described above, for cases where a prior file is updated, the assignment scheme can also involve associating a first character display format with the data that is the update but not in the prior file, and associating a second character display format with the data in the prior file.

When the prior file is updated locally by receiving an updated file through one of system 100's input devices, such as keyboard 140 or LAN 160, the data in the updated file is forwarded to processor 110. Processor 110 retrieves the prior file from memory 120 and compares the updated file with the prior file. The new data, which is data that is in the updated file and not in the prior file, is time stamped with the time the updated file is received. The data and its time stamp are then stored in memory 120. The data that is in both the updated file and the prior file retains the time stamp already associated with data in the prior file. The data that is in the prior file but not in the updated file can be erased from memory 120. The time stamp associated with the erased data is also erased. Alternatively, this data and its time stamp can be marked to show that the update indicated that they should be erased. The data in memory 120 at the end of this process is the current file. When the information represented by the data in the current file is to be displayed, the data in the current file and its time stamp are forwarded to processor 110, which associates a display format with the data according to the assignment scheme as described above. Processor 110 then sends the data and its associated display format to display 130.

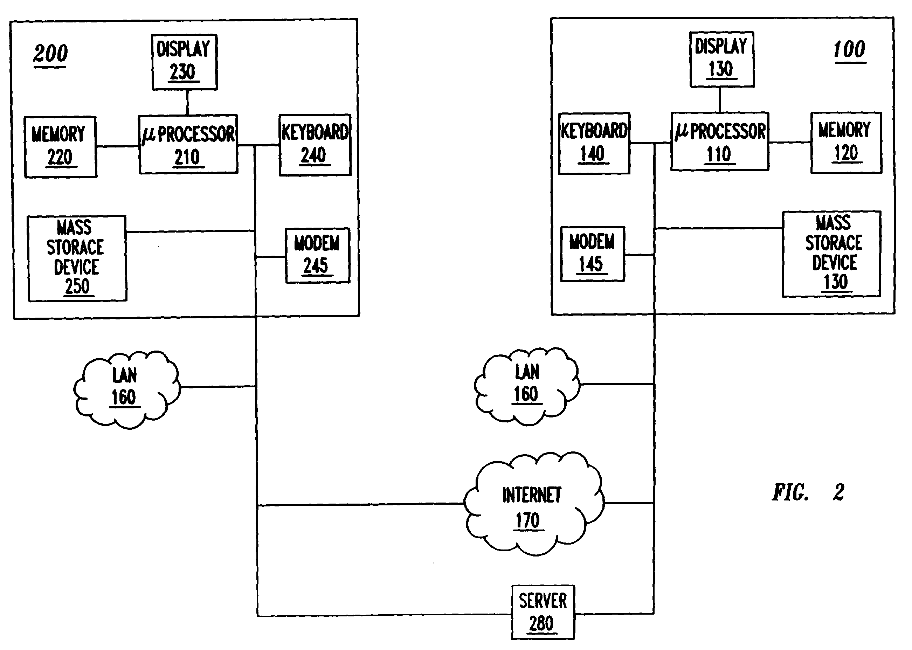

Referring to Figure 2, a prior file, such as a news story, can be updated at a remote system 200 and then the current file generated by the updating is received by system 100. Preferably, remote system 200 is a server, although it can be any system that allows data to be received and time stamped, such as a conventional computer. System 200 has one or more input devices, a processor, such as microprocessor 210, and memory 220. The input device can be any input device, including key board 240, modem 245, mass storage device 250, or a communications network, such LAN 260, a WAN, or Internet 270. System 200 may also include other elements, such as a display 230, or an application specific integrated circuit (ASIC) (not shown).

A prior file is stored in memory 220. The data in the prior file is time stamped with the time the data was added to the prior file. When the prior file is updated by receiving a partial update through one of the remote system 200's input devices such as keyboard 240 or LAN 260, the data in the partial update is forwarded to processor 210 where it is time stamped. The data in the partial update and its time stamp is then stored in memory 220. If the partial update replaces some data from the prior file, the replaced data and its time stamp are erased from memory 220, or they can be marked to show that the update indicated that they should be deleted. The data in memory 220 at the end of this process is the current file, which is then sent either directly to system 100, posted on remote system 200, or posted to a server 280.

When the prior file is updated by receiving an updated file through one of remote system 200's input devices, such as keyboard 240 or LAN 260, the data in the updated file is forwarded to processor 210. Processor 210 retrieves the prior file from memory 220, and compares the updated file with the prior file. The data that is in the updated file and not in the prior file is time stamped with the time the updated file is received. It and its time stamp are then stored in memory 220. The data that is in both the updated file and the prior file retains the time stamp already associated with data in the prior file. The data that is in the prior file but not in the updated file is erased from memory 120. The time stamp associated with the erased data is also erased. Alternatively, this data and its time stamp can be marked to show that the update indicated that they should be erased. The data in memory 120 at the end of this process is the current file, which is then sent to either directly to system 100, posted on remote system 200, or posted to a server 280.

System 100 receives the current file either directly from remote system 200 or by accessing either remote system 200 or server 280. System 100 retrieves the assignment scheme for associating a display format with the data. In one embodiment of the invention, processor 110 receives the current file and retrieves the assignment scheme. Processor 110 associates a display format with the data according to the assignment scheme, as described above, and sends the data to display 130 for the information represented by the data to be displayed using its associated display format. In another embodiment of the invention, the assignment scheme is stored as a cookie-based scheme, meaning that it is stored as user preferences for a particular Web user. When system 100 accesses the current file on remote system 200, remote system 200 uses these user preferences, which now include the assignment scheme, to format the current file before opening it to system 100 for display. Remote system 200 then sends the current file to display 130 for the information represented by the data to be displayed using its associated display format. If, on the other hand, the current file is posted to server 280, then server 280 employs the user preferences to format the current file, and send the current file to display 130 to be displayed using its associated display format.

## Claims

1. A method for associating a display format with data, the method CHARACTERIZED BY the steps of:
obtaining the data;
associating a display format with the data based on a time associated with the data.

2. The method according to claim 1, CHARACTERIZED IN THAT the time associated with the data is related to the time the data is received.

3. The method according to claim 1, CHARACTERIZED IN THAT the time associated with the data is related to the time the data is created.

4. The method according to claim 1, CHARACTERIZED IN THAT the step of obtaining the data comprises receiving data having a time stamp, where the time associated with the data is the time represented by the time stamp.

5. The method according to claim 1, further comprising the step of time stamping the data, where the time associated with the data is the time stamped on the data.

6. The method according to claim 1, further comprising the step of displaying the information represented by the data on a display (130) using the display format associated with the data.

7. The method according to claim 6, CHARACTERIZED IN THAT:
the display (130) is a screen; and
the display format includes color of a character represented by the data.

8. The method according to claim 6, CHARACTERIZED IN THAT:
the display (130) is a speaker; and
the display format includes a voice characteristic.

9. The method according to claim 1, CHARACTERIZED IN THAT:
the obtaining step comprises obtaining an update to a prior file, the prior file having time stamped data;
further comprising the step of time stamping data in the update; and
the associating step comprises associating a display format with the data in the update and the data in the prior file based on the time stamp of the data.

10. The method according to claim 1 or 9, CHARACTERIZED IN THAT associating a display format with the data comprises the steps of:
defining a plurality of time intervals;
selecting a display format for each time interval in the plurality of time intervals; and
associating a selected display format with the data based on the time interval within which the time associated with the data falls.

11. The method according to claim 10, CHARACTERIZED IN THAT the plurality of time intervals comprise:
a first time interval starting at a particular time and ending one hour before the particular time;
a second time interval starting at an end of the first time interval and ending one day before the particular time; and
a third time interval starting at an end the second time interval and ending one week before the particular time.

12. The method according to claim 10, CHARACTERIZED IN THAT each of the selected display formats is different.

13. The method according to claim 1 or 9, CHARACTERIZED IN THAT display formats associated with different times are different.

14. The method according to claim 9, CHARACTERIZED IN THAT:
the step of obtaining an update comprises obtaining a partial update having data; and
the step of time stamping the data in the update includes time stamping the data in the partial update.

15. The method according to claim 9, CHARACTERIZED IN THAT:
the step of obtaining an update comprises obtaining an updated file having data;
the step of time stamping the data comprises the steps of:
comparing the updated file with the prior file;
time stamping data in the updated file that is different from the data in the prior file; and
retaining the time stamp associated with data in the prior file for data that is common to both the updated file and the prior file; and
the step of associating a display format with the data in the update and the data in the prior file comprises the steps of:
generating a current file having data in the updated file that is different from the data in the prior file and data that is common to both the updated file and the prior file; and
associating a display format with the data in the current file based on the time stamp of the data.

16. The method according to claim 9, CHARACTERIZED IN THAT the step of associating a display format with the data comprises the steps of:
associating a first character display format with the data in the update; and
associating a second character display format with the data in the prior file having a time stamp different from the time stamp of the data in the update.

17. The method according to claim 9, further comprising the steps of:
generating a current file by adding the data in the update to the prior file, and removing data in the prior file that is being replaced by the data in the update; and
storing the current file.
